# EUROPEAN PATENT SPECIFICATION

(11) **EP 4 429 517 B1**
(45) Date of publication and mention of the grant of the patent: **12.08.2026**
(21) Application number: 22813472.2
(22) Date of filing: 02.11.2022
(51) Int. Cl.: A46B 15/00, A46B 13/02

(54) **A TOOTHBRUSH FOR PROVIDING HISTORIC BRUSHING PERFORMANCE**
ZAHNBÜRSTE ZUR BEREITSTELLUNG HISTORISCHER BÜRSTENLEISTUNG
BROSSE À DENTS PERMETTANT DE FOURNIR UNE PERFORMANCE DE BROSSAGE HISTORIQUE

(30) Priority: 10.11.2021 EP 21207476
(43) Date of publication of application: 18.09.2024
(73) Proprietor: Koninklijke Philips N.V., 5656 AE Eindhoven (NL)
(72) Inventor: STUT, Wilhelmus Johannes Joseph, 5656 AG Eindhoven (NL)
(74) Representative: Philips Intellectual Property & Standards
(86) International application number: PCT/EP2022/080479
(87) International publication number: WO 2023/083650

(56) References cited:
- WO-A1-2021/044129
- US-A1- 2019 008 270
- US-A1- 2021 112 965

## Description

### FIELD OF THE INVENTION

The present invention relates to the field of oral care, and in particular to the provision of historic brushing performance by a toothbrush.

### BACKGROUND OF THE INVENTION

Many people do not perform oral care as effectively as they should. For example, it is typical for a person to apply an incorrect pressure when brushing his/her teeth. Indeed, in many cases people brush their teeth for too long, or do not brush their teeth long enough. This problem can be exacerbated for individual teeth, as some areas of the mouth may be neglected during a brushing session.

Recently, applications and corresponding devices have been developed that provide feedback on tooth brushing behavior measured by sensors. Such feedback is essential to provide a means for coaching users to brush their teeth optimally. The feedback may be provided during the brushing session, reacting in real-time to the brushing action of the user. Alternatively, feedback may be provided after the brushing session by a user interface.

Typically, feedback applications use a visual representation of the teeth on a display to give feedback on per-tooth brushing parameters (for example, pressure applied and time brushed). However, the visual representations usually swap the left and right sides of the mouth when compared to teeth observed through a mirror.

Patent application WO 2021/044129 A1 discloses a toothbrush comprising an orientation signal indicating the area of the mouth being brushed. The device providing feedback to the user regarding a brushing pressure being applied, or previously applied, to each of a plurality of different areas of the mouth.

Patent application US 2021/112965 A1 discloses a toothbrush system in which feedback is displayed on an external device after brushing, indicating how effectively different areas of the mouth were brushed.

Patent application US 2019/008270 A1 discloses a toothbrush system in which feedback on brushing performance is provided on an external device in the form of a dentist's map of the teeth, or via light segments on the toothbrush.

### SUMMARY OF THE INVENTION

The invention is defined by the claims.

According to an aspect of the invention, there is provided a toothbrush according to claim 1

A toothbrush according to embodiments of the invention may be used to provide feedback to a user regarding brushing performance/parameter values (e.g. pressure applied, time brushed, neglected area, etc.) during previous brushing sessions. Providing feedback to a user is essential for coaching the user how to brush teeth effectively. While real-time feedback regarding current brushing performance values may be important to provide the user with feedback on current brushing, the present invention provides feedback on historic (previous) brushing sessions, such that a user's unfavorable habits may be broken, and good habits reinforced.

Moreover, by having the feedback component integrated with (e.g. physically connected to) the toothbrush, there may be no need for an external display. Such an external display may not be readily available to the user, or may be too difficult for the user to understand. For example, the feedback component may be configured to provide the indicator of stored historic brushing performance values by a sensory means (e.g. by a light, sound, or haptic sensation). Such sensory means may be easier for a user to understand than a graphical user interface, and may also accommodate users having difficulty seeing.

Furthermore, a graphic of user's teeth with feedback on previous brushing performance is typically difficult to understand. This is because a visual representation of the teeth may be in a "dentist's view", whereas the user may observe their teeth in a mirror (that flips left and right). As such, a user may be confronted with difficulty in understanding which teeth correspond to teeth designated in advice given by a graphical user interface. This problem may be overcome by embodiments of the present invention via the provision of the indicator of stored historic brushing performance values corresponding to the oral surface in contact with the cleaning element.

In other words, embodiments of the invention may be directed towards a toothbrush adapted to provide an indication of historic brushing performance of a user. In particular, an oral surface of the user engaged by the cleaning element of the toothbrush may be determined by a location sensor. A feedback component integrated with the toothbrush may then provide an indicator of stored historic brushing performance values corresponding to the oral surface engaged by the cleaning element. In this way, feedback regarding previous tooth brushing sessions may be conveyed to the user without the need for an external display. Moreover, this may reduce the chance of confusion by a user regarding the identification of oral surfaces that may require a change in brushing behavior for effective brushing.

In some embodiments, the indicator may comprise one of a pre-defined set of discrete sensory output states of the sensory output means. As the indicator may comprise a discrete set of outputs, the user may find it easier to interpret the stored historic brushing performance value conveyed by the indicator. Indeed, the sensory output means may also be simplified.

In some embodiments, the sensory output means may comprise a light source configured to provide the indicator of the historic brushing performance values.

In some embodiments, the sensory output means may comprise a sound source configured to provide the indicator of the historic brushing performance values.

In some embodiments, the sensory output means may comprise a haptic source configured to provide the indicator of the historic brushing performance values.

By providing the sensory output means as a light source, a sound source or a haptic source, there may be provided a simple means to convey the stored historic brushing performance values to the user. One or more of these sources may be easily integrated with the toothbrush. For example, one or more LEDs may be used as a light source, a small speaker as a sound source, or a small motor as a vibration/haptic source.

In some embodiments, the processor may be configured to compare the historic brushing performance values to one or more performance threshold values; and control the feedback component to provide the indicator of the historic brushing performance values based on the comparison. In this way, the user may easily understand the stored historic brushing performance values conveyed by the indicator of the feedback component. Performance threshold values may be adjusted/customized for the user, and may also vary per-tooth. Accordingly, feedback provided by embodiments of the invention may be better suited to the user.

In some embodiments, the historic brushing performance values may comprise a plurality of pressure values, each pressure value indicative of a loading force applied to the cleaning element by engagement with an oral surface during previous brushing sessions. An important metric when assessing tooth brushing performance may be the force/pressure applied by the cleaning element to the surface of the tooth. By brushing too hard, the tooth or gum may be damaged. Conversely, by brushing too softly, the tooth or gun may not be adequately cleaned. Therefore, providing an indicator of historic pressure values may prove particularly beneficial in coaching a user in how to brush effectively.

In some embodiments, the historic brushing performance values may comprise a plurality of time values, each time value indicative of a time elapsed in which the cleaning element spent engaged with an oral surface during previous tooth-brushing sessions. An amount of time spent brushing individual oral surfaces may be an important metric in determining effectiveness in tooth brushing performance. By brushing for too long, the tooth or gum may be damaged. Conversely, by not brushing for long enough, the tooth or gum may not be adequately cleaned. Therefore, providing an indicator of historic values of time taken to brush per-tooth may prove particularly beneficial in coaching a user in how to brush effectively.

In some embodiments, the historic brushing performance values may include brushing performance values obtained during a previous predetermined period of time. A previous period of time may be defined, because tooth brushing sessions that occurred a long time ago may be less relevant that more recent tooth brushing session. As such, by defining a predetermined period of time, only the most relevant information may be stored. This may reduce the memory required by embodiments of the invention.

In some embodiments, the predetermined period of time may be a number of previous brushing sessions, an amount of cumulative previous brushing time, or a previous number of days.

In some embodiments, the oral surfaces may comprise individual teeth of the user. By defining oral surfaces as individual teeth, historic brushing performance values may be stored for each tooth, and thus may be used to provide information to the user for individual teeth. This may help to train users to avoid negligence of some teeth during brushing sessions.

In some embodiments, the oral surfaces may comprise sections of individual teeth of the user. Indeed, some users may brush the front of their teeth effectively, but neglect a back section of their teeth. Thus, individual sections of teeth may need to be individually accounted for in order to provide effective feedback to the user.

In some embodiments, the memory module may be configured to store historic brushing performance values corresponding to oral surfaces of the user, of a plurality of different brushing performance types. The toothbrush may further comprise a selection interface configured to receive a brushing performance type from the user. The processor may be configured to control the feedback component to provide an indicator of stored historic brushing performance values corresponding to the received brushing performance type. In other words, the user may select a parameter of which they desire feedback. For instance, the user may wish to be provided with an indicator of historic brushing performance values corresponding to a pressure applied to the teeth. Alternatively, the user may wish to be provided with an indicator of historic brushing performance values corresponding to time spent brushing teeth.

In some embodiments, the toothbrush may further comprise a pressure sensor configured to sense a loading force applied to the cleaning element by engagement with each of the oral surfaces of the user, and the memory module may be configured to store historic brushing performance values including the sensed loading force applied to the cleaning element by each of the oral surfaces of the user during a brushing session. Accordingly, the toothbrush may record more historic brushing performance values including a sensed loading force (applied pressure) for use in future feedback to the user. Updating the historic brushing performance values may ensure that feedback is up-to-date and accurate for the user.

In some embodiments, the toothbrush may further comprise a clock module configured to determine a length of time the cleaning element is engaged with each of the oral surfaces of the user, and the memory module may be further configured to store historic brushing performance values including the determined length of time the cleaning element is engaged with each of the oral surfaces of the user during a brushing session.

Further, the toothbrush may record more historic brushing performance values including a time spent brushing for use in future feedback to the user. Updating the historic brushing performance values may ensure that feedback is up-to-date and accurate for the user.

In some embodiments, the toothbrush may be operable in a brushing state, in which a vibration source causes vibration of the cleaning element, and in a non-brushing state in which the vibration source is inactive. The processor may be configured to control the provision of the indicator of the historic brushing performance only when the toothbrush is in the non-brushing state.

Therefore, the user may receive feedback in the form of an indicator of historic brushing performance values before a brushing session. Alternatively, or in addition, the provision of the indicator of the historic brushing performance may be when the toothbrush is in a brushing state.

According to another aspect of the invention, there is provided a method for providing an indication of historic tooth-brushing performance of a user according to claim 14.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a user interface for providing feedback of brushing performance to a user;
Fig. 2 depicts feedback types depending on pressure applied by a user during a tooth brushing session according to an aspect of an exemplary embodiment;
Fig. 3 presents information that may be stored in a memory module according to an aspect of an exemplary embodiment;
Fig. 4 is a simplified block diagram of a toothbrush adapted to provide an indication of historic brushing performance of a user according to an exemplary embodiment; and
Fig. 5 is a flow diagram of a method for providing an indication of historic tooth-brushing performance of a user according to another exemplary embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. If the term "adapted to" is used in the claims or description, it is noted the term "adapted to" is intended to be equivalent to the term "configured to".

It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to generating an augmented clinical note by inserting an identifier of a location of target subject information into a clinical note. According to proposed concepts, a number of possible solutions may be implemented separately or jointly. That is, although these possible solutions may be described below separately, two or more of these possible solutions may be implemented in one combination or another.

Embodiments of the invention aim to provide concepts for providing an indication of historic tooth-brushing performance of a user. More specifically, as a cleaning element of the toothbrush is moved over one or more oral surfaces of the user, a processor fetches historic brushing performance values corresponding to the oral surface proximate to the cleaning element, and generates an indicator based on the historic brushing performance values. The indicator is then conveyed to the user via a feedback component comprising sensory output means suitable for providing the indicator.

Embodiments of the invention may thus provide a means for conveying feedback regarding previous brushing sessions of the user without the need for an external display. This may be achieved by a feedback component integrated with the toothbrush. The feedback component is controlled by a processor that obtains historic brushing performance values (e.g. applied pressure, brushing time) associated with an oral surface, and produces an indicator based on the historic brushing performance values.

In this way, feedback regarding previous tooth brushing sessions may be conveyed to the user without the need for an external display. This may prove particularly advantageous as many users do not have access to an external display, or prefer not to bring such displays into the bathroom.

Moreover, this also reduces the chance of confusion by a user regarding the identification of oral surfaces that may require a change in brushing behavior. This is because typical solutions require a graphical representation of the user's teeth, which is flipped relative to the view seen by the user in the mirror.

Indeed, other typical feedback components integrated with toothbrushes react to a current measured brushing parameter (i.e. a pressure currently being applied), and provide feedback in real-time. Conversely, embodiments of the present invention relate to conveying information regarding previous/past brushing performance from previous/past brushing sessions. Thus, embodiments of the invention provide the user with information useful for guiding and augmenting long term habits.

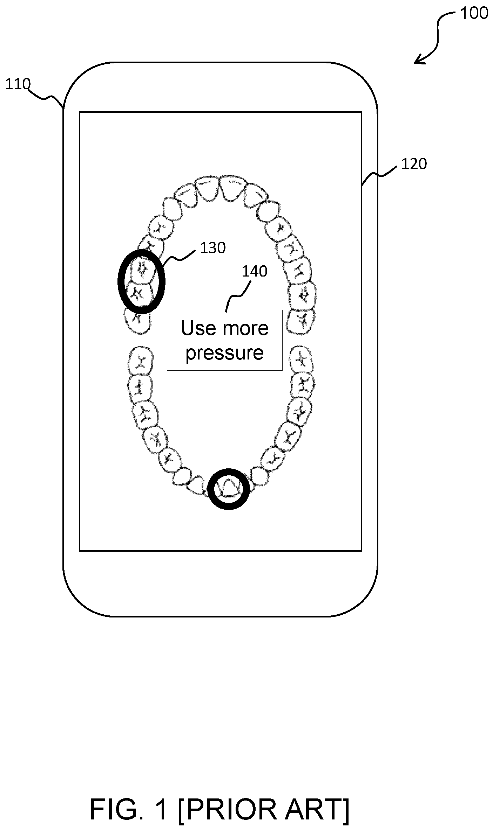

Turning to Fig. 1, there is illustrated a user interface 120 for providing feedback 130, 140 of brushing performance to a user according to the prior art.

By way of explanation, applications 120 are provided that give feedback 130, 140 on tooth brushing behavior measured by sensors. The feedback 130, 140 may be given during or after the brushing session. Such feedback 130, 140 is essential to coach people to brush their teeth optimally. For example, applications 120 may indicate the teeth that have been brushed too long or with too much pressure, in the current or last session, or over the last 30 days.

However, typical feedback solutions involving an application or other form of graphical representation of the teeth of the user have disadvantages including:
(i) The solutions require a physical display device 110 (e.g. a smartphone) capable of providing the visual representation. However, many users do not have such a device 110, or may not bring their device 110 to the bathroom during a tooth brushing session. Moreover, smart mirrors have not been widely adopted. Hence, a solution to provide feedback 130, 140 of historical brushing performance that does not require a display 110 would be very beneficial.
(ii) The provided graphical representation of the teeth has the right and left sides have been swapped (the right side is shown on the left, and vice versa). This may prove particularly confusing when using the graphical representation, while also observing teeth in the mirror. This is because the mirror shows the right side of the mouth on the right, but the application 120 shows the right side of the mouth is on the left (i.e. a standard view for the dentist). Thus, identification of which teeth the feedback 130, 140 applies to may be unclear.

Thus, embodiments of the invention attempt to overcome these problems by providing a feedback component integrated with the toothbrush. In some embodiments, this may be the addition of a small lamp (e.g. LED) to the toothbrush. In this case, colors of light may be used to indicate whether a tooth has been brushed with too much/little pressure (or too long/short) in the past session, or over the past n days. Thus, the light color shows whether an oral surface (a tooth, or a section of a tooth) has been brushed with too much/little pressure (or too long/short) while simply moving the brush head (cleaning element) along the teeth.

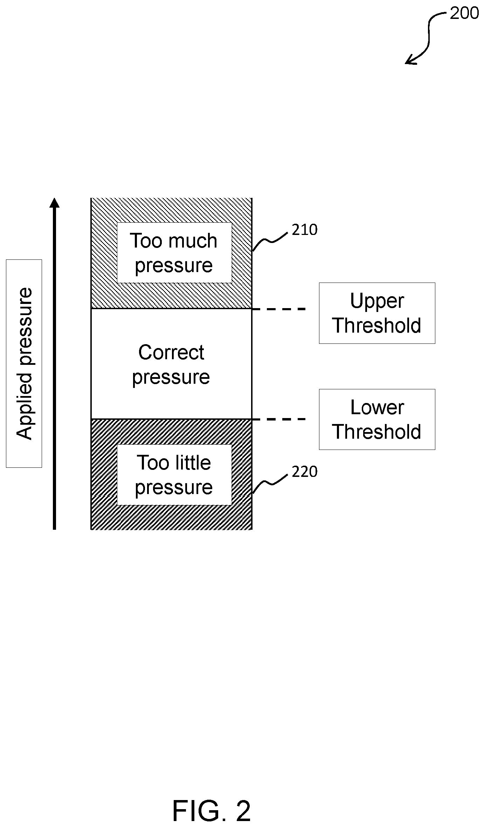

Fig. 2 depicts feedback modes depending on pressure applied by a user during a tooth brushing session according to an aspect of an exemplary embodiment. This may be in the form of different colors 210, 220 (represented by different shading of the boxes). When the toothbrush head is in contact with a tooth that has been brushed with too much pressure in previous sessions, a first color of light 210 may be provided by the feedback component. Conversely, when the toothbrush head is in contact with a tooth that has been brushed with too little pressure in previous sessions, a second color of light 220 may be provided by the feedback component.

The light provided by the feedback component may be reflected in a mirror, so the user does not have to watch the toothbrush. The user may also select that the feedback component provides colors to represent/indicate other brushing characteristics, such as a brushing time.

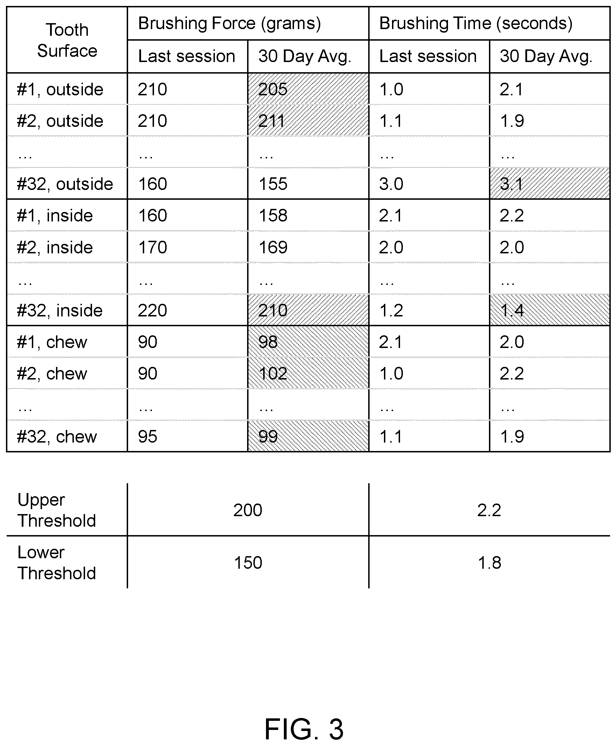

Fig. 3 presents information that may be stored in a memory module according to an aspect of an exemplary embodiment.

In some exemplary embodiments of the invention, a toothbrush may be provided which comprises a pressure sensor, a time sensor, and a position sensor. The sensors may be used to measure and determine the brushing pressure and brushing time per tooth. This information may be stored on a memory module in the form of historic brushing performance values.

The historic brushing performance values may be stored in the form of a repository. As shown in Fig. 3, the repository may store the brushing pressure and brushing time of the last session and the averages of the last n days (e.g. 30 days) per tooth, as well as the upper and lower thresholds for brushing pressure and brushing time. In the specific example shown in Fig. 3:
(i) in the last session, surface "#1, outside" was brushed with a pressure of 210 gram, and for 1.0 s;
(ii) in the last 30 days, surface "#1, outside" was brushed with an average pressure of 205 gram, and for on average 2.1 s;
(iii) the upper and lower thresholds for brushing pressure are 200 and 150 gram, and for brushing time 2.2 and 1.8 s, respectively; and
(iv) the 30-day averages that are above their thresholds are shaded diagonally from bottom left to top right, and the 30-day averages that are below the threshold are shaded diagonally from top left to bottom right.

Furthermore, in such a case there may be provided a mechanism (e.g. a physical button on the toothbrush) so the user can select what the brush should show when moving the brush head along the teeth (brushing pressure of last session, average brushing pressure of last n days, brushing time of last session, or average brushing time of last n days).

Finally, when the toothbrush is not operating in brushing mode, the user may simply move the brush head along the teeth. The position sensor measures the position, and feedback component may provide a colored light that indicates whether the tooth at this position has been brushed with too much/little pressure (or too long/short).

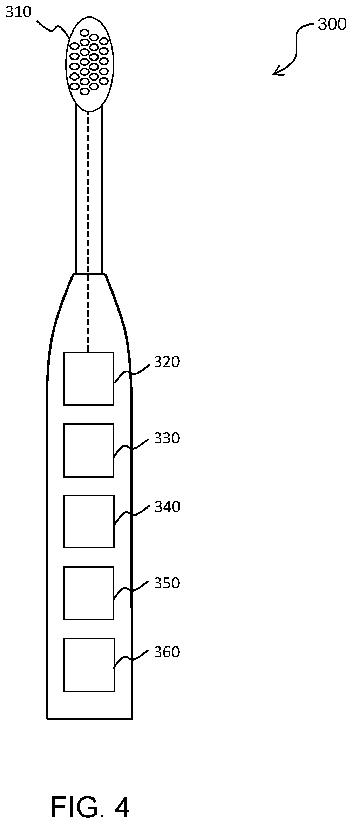

Referring now to Fig. 4, there shown is a simplified block diagram of a toothbrush 300 adapted to provide an indication of historic brushing performance of a user according to an exemplary embodiment. The toothbrush 300 may comprise a cleaning element 310, a sensing means 320 including a location sensor, a memory module 330, a feedback component 340, and a processor 350. Optionally, the sensing means 310 of the toothbrush 300 may further comprise a pressure sensor and a clock module. Furthermore, the toothbrush 300 may also comprise a selection interface 360.

The location sensor 320 is configured to determine a positioning of a cleaning element 310 of the toothbrush 300. In other words, the location sensor 320 is suitable for determining where in the user's mouth the cleaning element 310 of the toothbrush 300 is situated. As such, the location sensor 320 may be integrated in the cleaning element 310 of the toothbrush 300, but may also be implemented distal from the cleaning element 310. For example, the location sensor 320 may comprise a gyroscope and an accelerometer, or may be an external means such as a camera system.

Moreover, the cleaning element 310 of the toothbrush 300 may comprise a plurality of cleaning elements (e.g. bristles). However, the cleaning element 310 may also be any means suitable for cleaning teeth.

The memory module 330 is configured to store historic brushing performance values corresponding to oral surfaces of the user. Put another way, the memory module 330 is adapted store information regarding previous tooth brushing sessions performed by the user. The historic brushing performance values may be obtained from brushing using the toothbrush 300 itself, or from another device that captures historic brushing performance values (e.g. another toothbrush, or a dentist's assessment).

In some embodiments, the memory module 330 is configured to store historic brushing performance values corresponding to oral surfaces of the user, of a plurality of different brushing performance types. For example, the historic brushing performance values may include historic pressure applied by the cleaning element, or a historic brushing time.

The memory module 330 may be integrated with the toothbrush 300. Alternatively, or in addition, the memory module 330 may be stored on an external device.

Indeed, the historic brushing performance values may comprise a plurality of pressure values, each pressure value indicative of a loading force applied to the cleaning element 310 by engagement with an oral surface during previous brushing sessions. Alternatively, or in addition, the historic brushing performance values may comprise a plurality of time values, each time value indicative of a time elapsed in which the cleaning element 310 spent engaged with an oral surface during previous brushing sessions. However, the historic brushing performance values are not restricted hereto, and may contain any information pertinent to the question of brushing effectiveness.

Furthermore, the historic brushing performance values may include brushing performance values obtained during a previous predetermined period of time. The predetermined period of time may be a number of previous brushing sessions, an amount of cumulative previous brushing time, or a previous number of days. The predetermine period of time may be absolute between users, or may be dependent upon a user, or a selection of the user.

Also, the oral surfaces may be different sections of the user's set of teeth. For example, the oral surfaces may comprise top left teeth, top right teeth, bottom left teeth and bottom right teeth. Alternatively, the oral surfaces may be more specific. Indeed, the oral surfaces may comprise individual teeth of the user. Further, the oral surfaces may comprise sections of individual teeth of the user (chewing portion, an outside portion and an inside portion of each tooth). Of course, with increased granularity of oral surface, the more complex location determination is, and the larger the memory modules memory will need to be. However, increased granularity also means more feedback information for the user.

Moving on, the provided feedback component 340 is integrated with the toothbrush, and comprises a sensory output means. In this way, the feedback component 340 is connected to the toothbrush. Therefore, an external device to provide feedback regarding historic brushing performance may not be necessary.

The sensory output means may comprise at least one of a light source, a sound source, or a haptic source configured to provide the indicator of the historic brushing performance values. Thus, the sensory output means may be an LED, a speaker, or a vibration component. Indeed, the skilled person should appreciate that the sensory output means may be any device capable of providing an indicator to the user, while also being capable of integration with the toothbrush.

The processor 350 is configured to determine an oral surface of the user engaged by the cleaning element 310 of the toothbrush 300 based on an output from the location sensor 320. Thus, the processor 350 may be operatively connected to the location sensor.

Moreover, the processor 350 is configured to control the feedback component 340 to provide an indicator of stored historic brushing performance values corresponding to the oral surface engaged by the cleaning element 310. In some embodiments, the indicator comprises one of a pre-defined set of discrete sensory output states of the sensory output means. Thus, the processor 350 may be operatively connected to the feedback component 340 and memory module 330, and is capable of controlling the feedback component 340 to output the indicator to a user.

More specifically, the processor 350 may compare the historic brushing performance values to one or more performance threshold values. The processor 350 may then control the feedback component 340 to provide the indicator of the historic brushing performance values based on the comparison. By way of example, the one or more performance thresholds may comprise an upper threshold and a lower threshold. When a historic brushing performance value corresponding to an oral surface (proximate to the cleaning element 310) exceeds the upper threshold, or is below the lower threshold, the processor 350 may control the feedback component 340 to provide a first or second indicator. In this way, the user may be provided with feedback regarding historic brushing performance.

However, there may exist only one threshold, or more than two thresholds. For example, there may exist thresholds for different severity of deviation of historic brushing performance values from a desirable value.

In some embodiments, the toothbrush 300 is operable in a brushing state, in which a vibration source causes vibration of the cleaning element 310, and in a non-brushing state in which the vibration source is inactive. In this case, the processor 350 may be configured to control the provision of the indicator of the historic brushing performance only when the toothbrush 300 is in the non-brushing state. The processor 350 may alternatively be configured to control the provision of the indicator of the historic brushing performance only when the toothbrush 300 is in the brushing state. Indeed, the processor 350 may be configured to control the provision of the indicator of the historic brushing performance only when the toothbrush 300 is in either state, or in a state designated by the user.

Furthermore, the toothbrush 300 may optionally comprise a selection interface 360 configured to receive a brushing performance type from the user. The selection interface 360 may be any means suitable for integration with the toothbrush 300, and capable of user input, such as a button. Alternatively, the selection interface 360 may be provided by a different device, such as a smart phone.

In the case that the selection interface 360 is provided, the processor 350 may be further configured to control the feedback component 340 to provide an indicator of stored historic brushing performance values corresponding to the received brushing performance type. In other words, the selection interface 360 may enable the user to select the type of historic brushing performance values to be provided with an indicator of. For example, the user may choose to receive an indicator regarding a brushing pressure in a last brushing session, a brushing time in a last brushing session, brushing pressure average in the last 30 days, or a brushing time average in the last 30 days.

Finally, the sensing means 320 of the toothbrush may optionally further comprise a pressure sensor and/or a clock module. The pressure sensor may be configured to sense a loading force applied to the cleaning element 310 by engagement with each of the oral surfaces of the user. The clock module may be configured to determine a length of time the cleaning element 310 is engaged with each of the oral surfaces of the user.

When the pressure sensor is provided, the memory module 330 may be configured to store historic brushing performance values including the sensed loading force applied to the cleaning element 310 by each of the oral surfaces of the user during a brushing session. When the clock is provided, the memory module 330 may be further configured to store historic brushing performance values including the determined length of time the cleaning element 310 is engaged with each of the oral surfaces of the user during a brushing session. In this way, an updated historic brushing performance value(s) may be obtained.

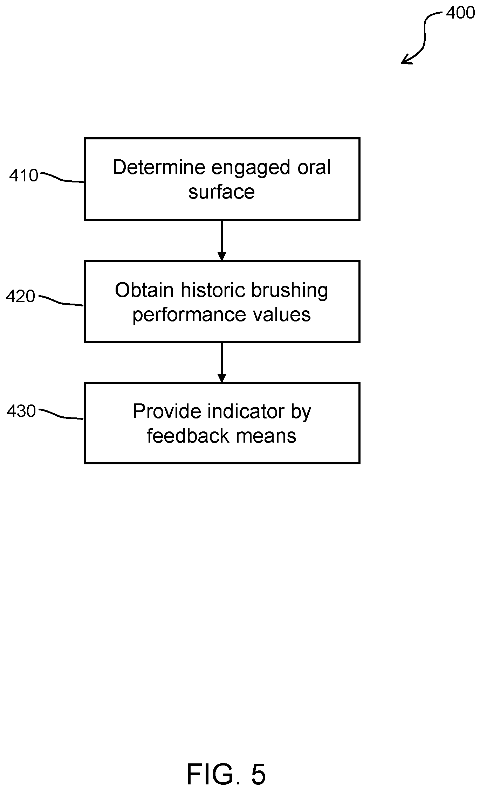

Fig. 5 presents a flow diagram 400 of a method for providing an indication of historic tooth-brushing performance of a user according to another exemplary embodiment.

At step 410, an oral surface of the user engaged by a cleaning element of a toothbrush is determined. This may be determined by any sensing means, either integrated with the toothbrush or external.

At step 420, historic brushing performance values corresponding to oral surfaces of the user is obtained.

The historic brushing performance values may comprise any information pertinent to the question of quality of the brushing during previous tooth brushing sessions of the user. For example, the historic brushing performance values may include a pressure applied, and brushing time, of each oral surface.

At step 430, a feedback means integrated in the toothbrush is controlled to provide an indicator of the historic brushing performance values of the oral surface corresponding to the oral surface engaged by the cleaning element, wherein the indicator comprises a sensory output.

A single processor or other unit may fulfil the functions of several items recited in the claims.

A computer program may be stored/distributed on a suitable medium, such as an optical storage medium or a solid-state medium supplied together with or as part of other hardware, but may also be distributed in other forms, such as via the Internet or other wired or wireless telecommunication systems.

The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Any reference signs in the claims should not be construed as limiting the scope.

## Claims

1. A toothbrush (300) adapted to provide an indication of historic brushing performance of a user, the toothbrush comprising:
a location sensor (320) configured to determine a positioning of a cleaning element (310) of the toothbrush;
a memory module (330) configured to store historic brushing performance values corresponding to oral surfaces of the user;
a feedback component (340) integrated with the toothbrush, the feedback component comprising a sensory output means; and
a processor (350) configured to:
determine an oral surface of the user engaged by the cleaning element of the toothbrush based on an output from the location sensor; and
to control the feedback component to provide an indicator of stored historic brushing performance values corresponding to the oral surface engaged by the cleaning element; and
wherein the toothbrush (300) is operable in a brushing state, in which a vibration source causes vibration of the cleaning element (310), and in a non-brushing state in which the vibration source is inactive; and
**characterized in that** the processor (350) is configured to control the provision of the indicator of the historic brushing performance only when the toothbrush is in the non-brushing state, as the toothbrush is moved along the oral surfaces of the user.

2. The toothbrush of claim 1, wherein the sensory output means is configurable to exhibit one of a pre-defined set of discrete sensory output states.

3. The toothbrush of claim 1 or 2, wherein the sensory output means comprises a light source configured to provide the indicator of the historic brushing performance values.

4. The toothbrush of any of claims 1-3, wherein the sensory output means comprises a sound source configured to provide the indicator of the historic brushing performance values.

5. The toothbrush of any of claims 1-4, wherein the sensory output means comprises a haptic source configured to provide the indicator of the historic brushing performance values.

6. The toothbrush of any of claims 1-5, wherein the processor (350) is configured to:
compare the historic brushing performance values to one or more performance threshold values; and
control the feedback component (340) to provide the indicator of the historic brushing performance values based on the comparison.

7. The toothbrush of any of claims 1-6, wherein the historic brushing performance values comprise a plurality of pressure values, each pressure value indicative of a loading force applied to the cleaning element by engagement with an oral surface during previous brushing sessions.

8. The toothbrush of any of claims 1-7, wherein the historic brushing performance values comprise a plurality of time values, each time value indicative of a time elapsed in which the cleaning element spent engaged with an oral surface during previous tooth-brushing sessions.

9. The toothbrush of any of claims 1-8, wherein the historic brushing performance values include brushing performance values obtained during a previous predetermined period of time, and optionally wherein the predetermined period of time is a number of previous brushing sessions, an amount of cumulative previous brushing time, or a previous number of days.

10. The toothbrush of any of claims 1-9, wherein the oral surfaces comprise individual teeth of the user, and optionally wherein the oral surfaces comprise sections of individual teeth of the user.

11. The toothbrush of any of claims 1-10, wherein the memory module (330) is configured to store historic brushing performance values corresponding to oral surfaces of the user, of a plurality of different brushing performance types, the toothbrush (300) further comprising:
a selection interface (360) configured to receive a brushing performance type from the user, and
wherein the processor (350) is configured to control the feedback component (340) to provide an indicator of stored historic brushing performance values corresponding to the received brushing performance type.

12. The toothbrush of any of claims 1-11, wherein the toothbrush further comprises:
a pressure sensor (320) configured to sense a loading force applied to the cleaning element (310) by engagement with each of the oral surfaces of the user, and
wherein the memory module (330) is configured to store historic brushing performance values including the sensed loading force applied to the cleaning element by each of the oral surfaces of the user during a brushing session.

13. The toothbrush of claim 12, wherein the toothbrush further comprises:
a clock module (320) configured to determine a length of time the cleaning element (310) is engaged with each of the oral surfaces of the user, and
wherein the memory module (330) is further configured to store historic brushing performance values including the determined length of time the cleaning element is engaged with each of the oral surfaces of the user during a brushing session.

14. A method (400) for providing an indication of historic tooth-brushing performance of a user, wherein a toothbrush (300) is operable in a brushing state, in which a vibration source causes vibration of a cleaning element (310), and in a non-brushing state in which the vibration source is inactive, the method comprising:
only in the non-brushing state, determining (410) an oral surface of the user engaged by a cleaning element of a toothbrush;
obtaining (420) historic brushing performance values corresponding to oral surfaces of the user; and
controlling (430) a feedback means integrated in the toothbrush to provide, as the toothbrush is moved along the oral surfaces of the user, an indicator of the historic brushing performance values of the oral surface corresponding to the oral surface engaged by the cleaning element, wherein the indicator comprises a sensory output.

## Patentansprüche

1. Zahnbürste (300), die dazu geeignet ist, Angaben zur bisherigen Putzleistung eines Benutzers bereitzustellen, wobei die Zahnbürste Folgendes umfasst:
einen Positionssensor (320), der konfiguriert ist, die Position eines Reinigungselements (310) der Zahnbürste zu bestimmen;
ein Speichermodul (330), das konfiguriert ist, bisherige Werte zur Putzleistung zu speichern, die den Mundflächen des Benutzers entsprechen;
eine in die Zahnbürste integrierte Rückmeldekomponente (340), wobei die Rückmeldekomponente eine Sensorausgabeeinrichtung umfasst; und
einen Prozessor (350), konfiguriert zum:
Bestimmen einer Mundfläche des Benutzers, die vom Reinigungselement der Zahnbürste in Eingriff gebracht wird, basierend auf einem Ausgangssignal des Positionssensors; und
Steuern der Rückmeldekomponente, um einen Indikator für gespeicherte bisherige Werte der Putzleistung bereitzustellen, die der vom Reinigungselement in Eingriff gebrachten Mundfläche entsprechen; und
wobei die Zahnbürste (300) in einem Putzzustand betriebsfähig ist, in dem eine Schwingungsquelle eine Schwingung des Reinigungselements (310) bewirkt, sowie in einem Nicht-Putzzustand, in dem die Schwingungsquelle inaktiv ist; und
**dadurch gekennzeichnet, dass** der Prozessor (350) so konfiguriert ist, dass er die Bereitstellung des Indikators der bisherigen Putzleistung nur dann steuert, wenn sich die Zahnbürste im Nicht-Putzzustand befindet, während die Zahnbürste entlang der Mundflächen des Benutzers bewegt wird.

2. Zahnbürste nach Anspruch 1, wobei die Sensorausgabeeinrichtung so konfigurierbar ist, dass sie einen aus einer vordefinierten Menge diskreter Sensorausgabezustände besitzt.

3. Zahnbürste nach Anspruch 1 oder 2, wobei die Sensorausgabeeinrichtung eine Lichtquelle umfasst, die so konfiguriert ist, dass sie den Indikator der bisherigen Werte der Putzleistung bereitstellt.

4. Zahnbürste nach einem der Ansprüche 1-3, wobei die Sensorausgabeeinrichtung eine Schallquelle umfasst, die so konfiguriert ist, dass sie den Indikator der bisherigen Werte der Putzleistung bereitstellt.

5. Zahnbürste nach einem der Ansprüche 1-4, wobei die Sensorausgabeeinrichtung eine haptische Quelle umfasst, die so konfiguriert ist, dass sie den Indikator der bisherigen Werte zur Putzleistung bereitstellt.

6. Zahnbürste nach einem der Ansprüche 1-5, wobei der Prozessor (350) konfiguriert ist zum:
Vergleichen der bisherigen Werte zur Putzleistung mit einem oder mehreren Leistungsschwellenwerten; und
Steuern der Rückmeldekomponente (340), um, basierend auf dem Vergleich, den Indikator der bisherigen Werte zur Putzleistung bereitzustellen.

7. Zahnbürste nach einem der Ansprüche 1-6, wobei die bisherigen Werte zur Putzleistung eine Vielzahl von Druckwerten umfassen, wobei jeder Druckwert eine Belastungskraft angibt, die während vorheriger Putzvorgänge durch den Eingriff des Reinigungselements mit einer Mundoberfläche auf das Reinigungselement ausgeübt wurde.

8. Zahnbürste nach einem der Ansprüche 1-7, wobei die bisherigen Putzleistungswerte eine Vielzahl von Zeitwerten umfassen, wobei jeder Zeitwert die abgelaufene Zeit angibt, während des Eingriffs des Reinigungselements bei vorherigen Zahnputzvorgängen mit einer Mundoberfläche.

9. Zahnbürste nach einem der Ansprüche 1-8, wobei die bisherigen Putzleistungswerte Putzleistungswerte einschließen, die während eines vorherigen, vorbestimmten Zeitraums erhalten wurden, und wobei der vorbestimmte Zeitraum optional eine Anzahl vorheriger Zahnputzvorgänge, eine kumulierte vorherige Zahnputzzeit oder eine Anzahl vorheriger Tage ist.

10. Zahnbürste nach einem der Ansprüche 1-9, wobei die Mundoberflächen einzelne Zähne des Benutzers umfassen und wobei die Mundoberflächen optional Abschnitte einzelner Zähne des Benutzers umfassen.

11. Zahnbürste nach einem der Ansprüche 1-10, wobei das Speichermodul (330) so konfiguriert ist, dass es bisherige Werte der Putzleistung speichert, die den Mundflächen des Benutzers entsprechen und aus einer Vielzahl verschiedener Arten von Putzleistung bestehen, wobei die Zahnbürste (300) weiter Folgendes umfasst:
eine Auswahlschnittstelle (360), die so konfiguriert ist, dass sie vom Benutzer eine Art der Putzleistung entgegennimmt, und
wobei der Prozessor (350) so konfiguriert ist, dass er die Rückmeldekomponente (340) so steuert, dass sie einen Indikator der gespeicherten bisherigen Putzleistungswerte bereitstellt, die der entgegengenommenen Art der Putzleistung entsprechen.

12. Zahnbürste nach einem der Ansprüche 1-11, wobei die Zahnbürste weiter Folgendes umfasst:
einen Drucksensor (320), der so konfiguriert ist, dass er eine auf das Reinigungselement (310) durch einen Eingriff mit jeder der Mundoberflächen des Benutzers ausgeübte Belastungskraft erfasst, und
wobei das Speichermodul (330) so konfiguriert ist, dass es bisherige Werte der Putzleistung speichert, einschließlich der erfassten Belastungskraft, die während einer Putzsitzung von jeder der Mundoberflächen des Benutzers auf das Reinigungselement angewendet wird.

13. Zahnbürste nach Anspruch 12, wobei die Zahnbürste weiter Folgendes umfasst:
ein Zeitmessmodul (320), das dazu konfiguriert ist, die Zeitdauer zu bestimmen, während das Reinigungselement (310) mit jeder der Mundoberflächen des Benutzers eingreift, und
wobei das Speichermodul (330) weiter dazu konfiguriert ist, bisherige Werte zur Putzleistung zu speichern, einschließlich der bestimmten Zeitdauer, während das Reinigungselement während einer Putzsitzung mit jeder der Mundoberflächen des Benutzers eingreift.

14. Verfahren (400) zum Bereitstellen einer Angabe der bisherigen Putzleistung eines Benutzers, wobei eine Zahnbürste (300) in einem Putzzustand betrieben werden kann, in dem eine Schwingungsquelle eine Schwingung eines Reinigungselements (310) bewirkt, sowie in einem Nicht-Putzzustand, in dem die Schwingungsquelle inaktiv ist, wobei das Verfahren Folgendes umfasst:
nur im Nicht-Putzzustand, Bestimmen (410) einer Mundfläche des Benutzers, die durch ein Reinigungselement einer Zahnbürste in Eingriff gebracht wird;
Erhalten (420) bisheriger Putzleistungswerte, die den Mundflächen des Benutzers entsprechen; und
Steuern (430) einer in die Zahnbürste integrierten Rückmeldeeinrichtung, um, während die Zahnbürste entlang der Mundoberflächen des Benutzers bewegt wird, einen Indikator für die bisherigen Werte der Putzleistung der Mundoberfläche bereitzustellen, die vom Reinigungselement in Eingriff gebracht wird, wobei der Indikator ein Sensorausgangssignal umfasst.

## Revendications

1. Brosse à dents (300) adaptée pour fournir une indication de performance de brossage historique d'un utilisateur, la brosse à dents comprenant :
un capteur de position (320) configuré pour déterminer un positionnement d'un élément de nettoyage (310) de la brosse à dents ;
un module de mémoire (330) configuré pour stocker les valeurs de performances de brossage historiques correspondant aux surfaces buccales de l'utilisateur ;
un composant de rétroaction (340) intégré à la brosse à dents, le composant de rétroaction comprenant un moyen de sortie sensorielle ; et
un processeur (350) configuré pour :
déterminer la surface buccale de l'utilisateur en contact avec l'élément nettoyant de la brosse à dents sur la base d'une sortie du capteur de position ; et
commander le composant de rétroaction afin de fournir un indicateur des valeurs de performances de brossage historiques enregistrées correspondant à la surface buccale entrant en contact avec l'élément de nettoyage ; et
dans laquelle la brosse à dents (300) est utilisable en mode brossage, dans lequel une source de vibration provoque la vibration de l'élément de nettoyage (310), et en mode non-brossage, dans lequel la source de vibration est inactive ; et
**caractérisée en ce que** le processeur (350) est configuré pour commander la fourniture de l'indicateur de performance de brossage historique uniquement lorsque la brosse à dents est en mode non-brossage, lorsque la brosse à dents est déplacée le long des surfaces buccales de l'utilisateur.

2. Brosse à dents selon la revendication 1, dans laquelle le moyen de sortie sensorielle est configurable pour présenter l'un d'un ensemble prédéfini des modes de sortie sensorielle discrets prédéfinis.

3. Brosse à dents selon la revendication 1 ou 2, dans laquelle le moyen de sortie sensorielle comprend une source de lumière configurée pour fournir l'indicateur des valeurs de performances de brossage historiques.

4. Brosse à dents selon l'une quelconque des revendications 1-3, dans laquelle le moyen de sortie sensorielle comprend une source de son configurée pour fournir l'indicateur des valeurs de performances de brossage historiques.

5. Brosse à dents selon l'une quelconque des revendications 1-4, dans laquelle le moyen de sortie sensorielle comprend une source haptique configurée pour fournir l'indicateur des valeurs de performances de brossage historiques.

6. Brosse à dents selon l'une quelconque des revendications 1-5, dans laquelle le processeur (350) est configuré pour :
comparer les valeurs de performances de brossage historiques à une ou plusieurs valeurs seuils de performance ; et
commander le composant de rétroaction (340) pour fournir l'indicateur des valeurs de performances de brossage historiques sur la base de la comparaison.

7. Brosse à dents selon l'une quelconque des revendications 1-6, dans laquelle les valeurs de performances de brossage historiques comprennent une pluralité de valeurs de pression, chaque valeur de pression indiquant une force de charge appliquée à l'élément de nettoyage par contact avec une surface buccale lors de séances de brossage précédentes.

8. Brosse à dents selon l'une quelconque des revendications 1-7, dans laquelle les valeurs de performances de brossage historiques comprennent une pluralité de valeurs de temps, chaque valeur de temps indiquant un temps écoulé pendant lequel l'élément de nettoyage a été en contact avec une surface buccale lors de séances de brossage de dents précédentes.

9. Brosse à dents selon l'une quelconque des revendications 1-8, dans laquelle les valeurs de performances de brossage historiques incluent des valeurs de performance de brossage obtenues pendant une période de temps prédéterminée précédente, et facultativement dans laquelle la période de temps prédéterminée est un nombre de séances de brossage précédentes, une quantité de temps de brossage précédent cumulé ou un nombre de jours précédent.

10. Brosse à dents selon l'une quelconque des revendications 1-9, dans laquelle les surfaces buccales comprennent des dents individuelles de l'utilisateur, et facultativement dans laquelle les surfaces buccales comprennent des sections de dents individuelles de l'utilisateur.

11. Brosse à dents selon l'une quelconque des revendications 1-10, dans laquelle le module de mémoire (330) est configuré pour stocker des valeurs de performances de brossage historiques correspondant aux surfaces buccales de l'utilisateur, d'une pluralité de types de performance de brossage différents, la brosse à dents (300) comprenant en outre :
une interface de sélection (360) configurée pour recevoir un type de performance de brossage de l'utilisateur, et
dans laquelle le processeur (350) est configuré pour commander le composant de rétroaction (340) pour fournir un indicateur des valeurs de performances de brossage historiques stockées correspondant au type de performance de brossage reçu.

12. Brosse à dents selon l'une quelconque des revendications 1-11, dans laquelle la brosse à dents comprend en outre :
un capteur de pression (320) configuré pour détecter une force de charge appliquée à l'élément de nettoyage (310) par contact avec chacune des surfaces buccales de l'utilisateur, et
dans laquelle le module de mémoire (330) est configuré pour stocker les valeurs de performances de brossage historiques, incluant la force de charge détectée appliquée à l'élément de nettoyage par chacune des surfaces buccales de l'utilisateur pendant une session de brossage.

13. Brosse à dents selon la revendication 12, dans laquelle la brosse à dents comprend en outre :
un module d'horloge (320) configuré pour déterminer une durée pendant laquelle l'élément de nettoyage (310) est en contact avec chacune des surfaces buccales de l'utilisateur, et
dans laquelle le module de mémoire (330) est en outre configuré pour stocker les valeurs de performances de brossage historiques, incluant la durée déterminée pendant laquelle l'élément de nettoyage est en contact avec chacune des surfaces buccales de l'utilisateur pendant une séance de brossage.

14. Procédé (400) pour fournir une indication de performances de brossage de dents historiques d'un utilisateur, dans lequel une brosse à dents (300) est utilisable en mode brossage, dans lequel une source de vibration provoque la vibration d'un élément de nettoyage (310), et en mode non-brossage, dans lequel la source de vibration est inactive, le procédé comprenant :
uniquement en mode non-brossage, la détermination (410) d'une surface buccale de l'utilisateur entrant en contact avec un élément de nettoyage d'une brosse à dents ;
l'obtention (420) de valeurs de performances de brossage historiques correspondant aux surfaces buccales de l'utilisateur ; et
la commande (430) d'un moyen de rétroaction intégré dans la brosse à dents pour fournir, lorsque la brosse à dents est déplacée le long des surfaces buccales de l'utilisateur, un indicateur des valeurs de performances de brossage historiques de la surface buccale correspondant à la surface buccale entrant en contact avec l'élément de nettoyage, dans lequel l'indicateur comprend une sortie sensorielle.
